# EUROPÄISCHE PATENTANMELDUNG

(11) **EP 0 827 286 A2**
(43) Veröffentlichungstag der Anmeldung: **04.03.1998**
(21) Anmeldenummer: 97202554.8
(22) Anmeldetag: 20.08.1997
(51) Int. Cl.: H04B 1/48

(54) **Telekommunikationsgerät mit als Ringschaltung ausgeführter Schaltvorrichtung**

(30) Priorität: 29.08.1996 DE 19635175
(71) Anmelder: Philips Patentverwaltung GmbH, 22335 Hamburg (DE); Philips Electronics N.V., 5621 BA Eindhoven (NL)
(72) Erfinder: Burdenski, Ralf, Dr., Röntgenstrasse 24, 22335 Hamburg (DE); Marshall, Christopher, Dr., Röntgenstrasse 24, 22335 Hamburg (DE)
(74) Vertreter: Volmer, Georg, Dipl.-Ing.

(57) **Zusammenfassung**

Die Erfindung betrifft ein Telekommunikationsgerät, insbesondere ein Funkgerät, mit einer als Ringschaltung ausgeführten Schaltvorrichtung (1), die vier Schaltzweige mit jeweils einem Schaltelement (6, ..., 9; D6, ... , D9) aufweist. Die Schaltzweige dienen jeweils zur Kopplung eines Senders (14) oder eines Empfängers (13) des Funkgeräts (12) mit einer von zwei Antennen (16, 17). Den Schaltelementen (6, ... , 9; D6, ... , D9) sind Kompensationszweige (10,11; L10, C10, L11, C11) parallel geschaltet, die jeweils zur Erzeugung einer Parallelresonanz zusammen mit einem sperrenden Schaltelement dienen.

Um die Anzahl der zur Realisierung der Schaltvorrichtung (1) des Telekommunikationsgeräts erforderlichen Bauelemente zu reduzieren, wird vorgeschlagen, daß die Zuordnung eines Kompensationszweiges (10,11; L10, C10, L11, C11) zu einem der Schaltelemente (6, ... , 9; D6, ... , D9) vom Schaltzustand der Schaltvorrichtung (1) abhängig ist.

## Beschreibung

Die Erfindung bezieht sich auf ein Telekommunikationsgerät, insbesondere ein Funkgerät, mit einer als Ringschaltung ausgeführten Schaltvorrichtung, die vier Schaltzweige mit jeweils einem Schaltelement aufweist, die zur wahlweisen Kopplung von zwei ersten Signalwegen mit zwei zweiten Signalwegen dient und deren Schaltelementen Kompensationszweige parallel geschaltet sind, die jeweils zur Erzeugung einer Parallelresonanz zusammen mit einem sperrenden Schaltelement dienen.

Aus der DE 44 30 987 C1 ist ein Funkgerät bekannt, das eine als Ringschaltung ausgeführte Schaltvorrichtung mit vier Schaltzweigen enthält. Die Schaltzweige enthalten jeweils ein Schaltelement und dienen zur Kopplung des Senders oder des Empfängers des Funkgeräts mit jeweils einer von zwei Sende-/Empfangsantennen. Ist beispielsweise der Sender des Funkgeräts mit einer der beiden Antennen zur Ausstrahlung eines Signals gekoppelt, ist die Einkopplung des vom Sender erzeugten Signals über die Schaltvorrichtung auf den Empfänger zu unterdrücken, d.h. ein Schaltelement der Schaltvorrichtung darf im sperrenden Zustand insbesondere hochfrequente Signale nicht oder nur unwesentliche Anteile durchlassen.

Es ist weiterhin bekannt, jedem Schaltelement einen Kompensationszweig parallel zu schalten, der bei einer Ausführung der Schaltelemente als Halbleiterschalter mit dem parallel geschalteten Schaltelement in dessen Sperrzustand eine Parallelresonanz bewirkt. Dies erhöht die Sperrwirkung eines Halbleiterschalters im geöffneten (sperrenden) Zustand. Die Sperrwirkung eines geöffneten Halbleiterschalters wird dadurch beeinträchtigt, daß im sperrenden Zustand nach außen eine im wesentlichen durch Gehäuseeinflüsse bedingte Kapazität wirksam ist, die zu einer verringerten Dämpfung bzw. einem Teildurchlaß von hochfrequenten Signalen führt. Dies ist für alle Funkanwendungen relevant, z. B. bei GSM-Geräten ("Global System for Mobile communications") oder DECT-Geräten ("Digital European Cordless Telecommunication"). Die parallel geschalteten Kompensationszweige dienen zur Kompensation dieses Effektes.

Der Erfindung liegt die Aufgabe zugrunde, das Telekommunikationsgerät der eingangs genannten Art derart abzuändern, daß die Anzahl der zur Realisierung der Schaltvorrichtung des Telekommunikationsgeräts erforderlichen Bauelemente reduziert wird.

Die Aufgabe wird dadurch gelöst, daß die Zuordnung eines Kompensationszweiges zu einem der Schaltelemente vom Schaltzustand der Schaltvorrichtung abhängig ist.

Dadurch muß nicht für jedes Schaltelement ein Kompensationszweig vorgesehen werden. Die Anzahl erforderlicher Kompensationszweige und damit die Anzahl Bauelemente, die zur Realisierung der der Schaltvorrichtung zugeordneten Kompensationsmittel erforderlich sind, wird verringert.

Insbesondere sind zwei Kompensationszweige vorgesehen, von denen einer zwei gegenüberliegende Anschlüsse der Schaltvorrichtung und der andere die beiden anderen Anschlüsse verbindet, wobei in den verschiedenen Schaltzuständen der Schaltvorrichtung sich nur eines der aus Halbleiterschaltelementen bestehenden Schaltelemente im Durchlaßzustand befindet und in den Kompensationszweigen Induktivitäten angeordnet sind, die zur Erzeugung von Parallelresonanzen mit der nach außen wirksamen Kapazität der sperrenden Schaltelemente, die dem sich im Durchlaßzustand befindenden Schaltelement benachbart sind, dienen. Auf diese Weise ergibt sich eine einfache und kostengünstige Ausführungsform. Durch die Ausführung der Schaltelemente als Halbleiterschaltelemente ist die Steuerung der Schaltelemente unproblematisch mit Hilfe einer Digitalschaltung realisierbar. Insbesondere sind dabei die Halbleiterschaltelemente als Schaltdioden ausgelegt, die sich durch Anlegen geeigneter Gleichspannungen in ihren Durchlaßzustand oder in ihren sperrenden Zustand versetzen lassen.

Die Erfindung betrifft auch eine Schaltvorrichtung mit vier in einer Ringschaltung angeordneten Schaltzweigen mit jeweils einem Schaltelement, bei der den Schaltelementen Kompensationszweige parallel geschaltet sind, die jeweils zur Erzeugung einer Parallelresonanz zusammen mit einem sperrenden Schaltelement dienen, und bei der die Zuordnung eines Kompensationszweiges zu einem der Schaltelemente vom Schaltzustand der Schaltvorrichtung abhängig ist. Die Schaltvorrichtung ist universell in allen Geräten einsetzbar, bei denen vier Signalwege für Wechselstrom- bzw. Hochfrequenzsignale geschaltet werden müssen und führt wie schon erwähnt zu einer Reduzierung der zur Realisierung von Kompensationsmitteln für die verwendeten Schaltelemente erforderlichen Bauelemente. Insbesondere werden ein Sender und ein Empfänger wahlweise mit zwei Antennen gekoppelt, was z.B. bei Mobilfunkendgeräten, die in Kraftfahrzeugen eingesetzt werden, verwendet wird. Für diesen Anwendungsfall ist eine Umschaltung von der Sende-/Empfangsantenne des Mobilfunkendgeräts auf eine Sende-/Empfangsaußenantenne des Kraftfahrzeugs vorteilhaft. Die Erfindung bezieht sich auch auf ein Verfahren zum Betreiben einer solchen Schaltvorrichtung.

Ausführungsbeispiele der Erfindung werden im folgenden anhand der Zeichnungen näher erläutert. Es zeigen:
Fig. 1 eine als Ringschaltung ausgeführte Schaltvorrichtung und
Fig. 2 ein als Funkgerät ausgeführtes erfindungsgemäßes Telekommunikationsgerät.

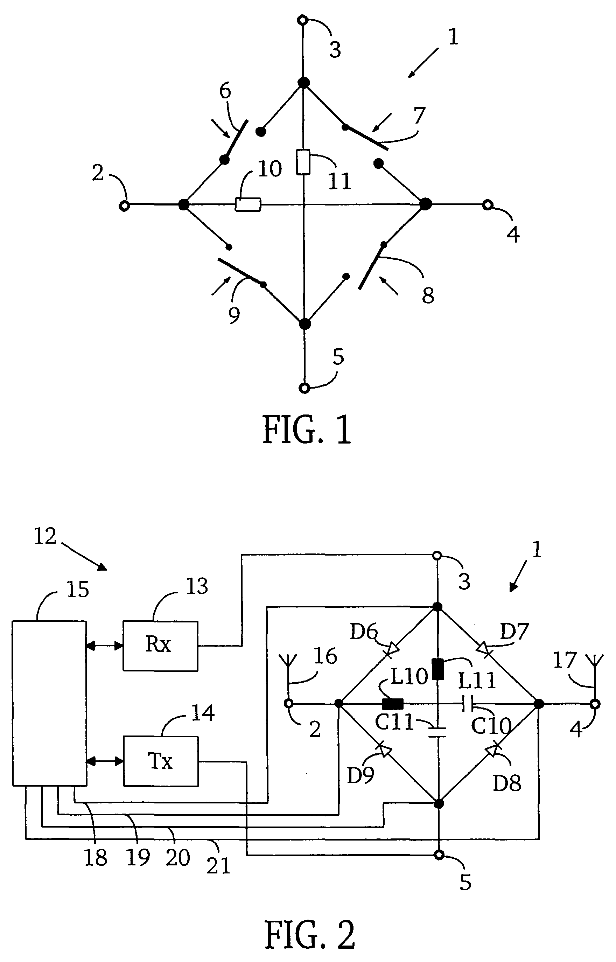

Die in Fig. 1 dargestellte und als Ringschaltung ausgeführte Schaltvorrichtung 1 weist Anschlüsse 2, 3, 4 und 5 auf, die zur Kopplung mit verschiedenen Signalwegen vorgesehen sind. Zwischen den Anschlüssen 2 bis 5 liegen steuerbare Schaltelemente 6, 7, 8 und 9, deren Steuerbarkeit durch Pfeile angedeutet ist.

Zwischen den Anschlüssen 2 und 3 liegt das Schaltelement 6, zwischen den Anschlüssen 3 und 4 das Schaltelement 7, zwischen den Anschlüssen 4 und 5 das Schaltelement 8 und zwischen den Anschlüssen 5 und 2 das Schaltelement 9. Zwei gegenüberliegende Anschlüsse lassen sich wahlweise durch entsprechende Ansteuerung der Schaltelemente 6 bis 9 mit jeweils einem anderen der beiden übrigen Anschlüsse koppeln. So läßt sich der Anschluß 3 mit den Anschlüssen 2 und 4 und der Anschluß 5 ebenfalls mit den Anschlüssen 2 und 4 koppeln. Bei der vorliegenden Schaltvorrichtung 1 sind nur Schaltzustände vorgesehen, bei denen eines der vier Schaltelemente sich im Durchlaßzustand und die übrigen drei Schaltelemente sich im sperrenden Zustand befinden. Wird beispielsweise das Schaltelement 6 in seinen Durchlaßzustand geschaltet, werden die übrigen Schaltelemente 7 bis 9 in ihren sperrenden Zustand versetzt. In diesem Schaltzustand kann entweder vom Anschluß 2 ein Signal zum Anschluß 3 oder umgekehrt ein Signal vom Anschluß 3 zum Anschluß 2 übertragen werden.

Zwischen den Anschlüssen 2 und 4 ist eine Impedanz 10 angeschlossen, die damit parallel zu den Schaltelementen 6 und 7 bzw. parallel zu den Schaltelementen 8 und 9 liegt. Zwischen den Anschlüssen 3 und 5 liegt eine Impedanz 11, die somit parallel zu den Schaltelementen 6 und 9 bzw. parallel zu den Schaltelemten 7 und 8 liegt. Die Zweige mit dem Impedanzen 10 und 11 bilden zwei Kompensationszweige, die zur Kompensation von im sperrenden Zustand der Schaltelemente 6 bis 9 nach außen wirksamen Kapazitäten der Schaltelemente 6 bis 9 dienen. Insbesondere Halbleiterschaltelemente weisen im sperrenden Zustand eine entsprechende parasitäre Kapazität auf, die im wesentlichen durch die Gehäusekapazität solcher Bauelemente bestimmt wird. Damit sind die Schaltelemente 6 bis 9 für Wechselstrom- und insbesondere Hochfrequenzsignale auch im sperrenden Zustand teildurchlässig.

Die Impedanzen 10 und 11 sind nun so ausgelegt, daß sie mit den benachbarten sperrenden Schaltelementen eines sich im Durchlaßzustand befindenden Schaltelements jeweils einen Parallelresonanzkreis für einen schmalbandigen Frequenzbereich bilden. Dies bewirkt eine erhöhte Dämpfung durch die sich im sperrenden (d.h. geöffneten) Zustand befindenden Schaltelemente. Ist beispielsweise das Schaltelement 6 im Durchlaßzustand (d.h. im geschlossenen Zustand), bilden einerseits die Impedanz 11 mit dem Schaltelement 9 über das Schaltelement 6 und andererseits die Impedanz 10 mit dem Schaltelement 7 über das Schaltelement 6 jeweils einen Parallelresonanzkreis. Je nach Frequenzlage sind die Werte der Impedanzen 10 und 11 zur Erzeugung von Parallelresonanzen auszulegen. Für dieses Beispiel (Schaltelement 6 im Durchlaßzustand) sind demgemäß die Impedanzen 10 und 11 dem Schaltelement 7 bzw. dem Schaltelement 9 zur Erzeugung einer Parallelresonanz zugeordnet. Für die Fälle, in denen ein anderes der vier Schaltelemente 6 bis 9 sich im Durchlaßzustand befindet und die übrigen Schaltelemente in ihren sperrenden Zustand gesteuert werden, ändert sich entsprechend dem angegebenen Schaltbild die Zuordnung der Kompensationszweige mit den Impedanzen 10 so, daß sie jeweils den beiden benachbarten Schaltelementen des sich im Durchlaßzustand befindenden Schaltelements zur Erzeugung von Parallelresonanzen zugeordnet sind.

Im Fig. 2 ist ein Funkgerät 12 mit einer Ausführungsform der Schaltvorrichtung 1 aus Fig. 1 dargestellt. Das Funkgerät 12 ist beispielsweise ein Mobilfunkendgerät nach dem GSM-Standard oder ein schnurloses Telefon nach dem DECT-Standard. Die Erfindung ist allerdings nicht auf solche Funkgeräte beschränkt. Auch eine Anwendung in anderen Telekommunikationsgeräten, bei denen zwei Sende-/oder Empfangssignale jeweils einer von zwei möglichen Signalwegen zugeordnet wird, kommt für die Erfindung in Betracht. Das vorliegende Funkgerät 12 enthält einen Empfänger 13 und einen Sender 14, die beide mit einem Digital-Teil 15 gekoppelt sind, der zur Umsetzung einer digitalen Signalverarbeitung von über den Empfänger 13 empfangenen Signalen bzw. über den Sender 14 abgestrahlten Signalen zuständig ist. Üblicherweise werden im Digitalteil 15 Mikroprozessoren und/oder Signalprozessoren eingesetzt. Der Empfänger 13 ist weiterhin mit dem Anschluß 3 der Schaltvorrichtung 1 gekoppelt. Entsprechend ist der Sender 14 mit dem Anschluß 5 der Schaltvorrichtung 1 gekoppelt. Die Anschlüsse 2 und 4 der Schaltvorrichtung 1 sind mit jeweils einer Antenne gekoppelt. An den Anschluß 2 ist eine Sende-/Empfangsantenne 16, an den Anschluß 4 ist eine Sende-/Empfangsantenne 17 angeschlossen. Entsprechend dem Schaltzustand der Schaltvorrichtung 1 ist entweder der Empfänger 13 mit einer der beiden Antennen 16 oder 17 oder der Sender 14 mit einer der beiden Antennen 16 oder 17 gekoppelt. Die Schaltelemente 6 bis 9 der Schaltvorrichtung 1 sind bei diesen Ausführungsbeispiel als Schaltdioden D6, D7, D8 und D9 realisiert. Eine andere Ausführung wäre beispielsweise eine Realisierung der Schaltelemente 6 bis 9 durch Transistor-Schaltelemente. Die Impedanz 10 ist durch eine Reihenschaltung aus einer Induktivität L10 und einem Kondensator C10 realisiert. Die Impedanz 11 ist durch eine Reihenschaltung aus einer Induktivität L11 und einem Kondensator C11 realisiert. Die Induktivitäten L10 und L11 dienen zur Erzeugung von Parallelresonanzen zusammen mit den je nach Schaltzustand der Schaltvorrichtung 1 ihnen zugeordneten sperrenden beiden Schaltdioden. Die Erzeugung von Parallelresonanzen und deren Zweck ist bereits im Zusammenhang mit Fig. 1 beschrieben worden. Im vorliegenden Fall wird insbesondere eine teilweise Übertragung von vom Sender 14 erzeugten Signalen mit hoher Leistung zum Empfänger 13 unterdrückt, wodurch Fehlfunktionen oder auch eine Zerstörung des Empfängers 13 vermieden werden.

Die Steuerung der Schaltdioden D6 bis D9 erfolgt durch über Steuerleitungen 18 bis 21 übertragene Gleichstromsignale. Durch geeignete Auswahl von Gleichspannungswerten werden die Dioden D6 bis D9 in ihren leitenden oder sperrenden Zustand versetzt. Die Kondensatoren C10 und C11 dienen zur Gleichspannungsentkopplung der beiden Anschlüsse des Kompensationszweiges mit der Impedanz 10 bzw. der beiden Anschlüsse des Kompensationszweiges mit der Impedanz 11, was wegen der Steuerung der Schaltdioden D6 bis D9 mit Hilfe von Gleichstromsignalen erforderlich ist.

## Patentansprüche

1. Telekommunikationsgerät, insbesondere Funkgerät, mit einer als Ringschaltung ausgeführten Schaltvorrichtung (1), die vier Schaltzweige mit jeweils einem Schaltelement (6, ... , 9; D6, ... , D9) aufweist, die zur wahlweisen Kopplung von zwei ersten Signalwegen (3, 5) mit zwei zweiten Signalwegen (2, 4) dient und deren Schaltelementen (6, ... , 9; D6, ... , D9) Kompensationszweige (10,11; L10, C10, L11, C11) parallel geschaltet sind, die jeweils zur Erzeugung einer Parallelresonanz zusammen mit einem sperrenden Schaltelement dienen,
dadurch gekennzeichnet,
daß die Zuordnung eines Kompensationszweiges (10,11; L10, C10, L11, C11) zu einem der Schaltelemente (6, ... , 9; D6, ... , D9) vom Schaltzustand der Schaltvorrichtung (1) abhängig ist.

2. Telekommunikationsgerät nach Anspruch 1,
dadurch gekennzeichnet,
daß zwei Kompensationszweige (10,11; L10, C10, L11, C11) vorgesehen sind, von denen einer (10; L10, C10) zwei gegenüberliegende Anschlüsse (2, 4) der Schaltvorrichtung und der andere (11; L11, C11) die beiden anderen Anschlüsse (3, 5) verbindet,
daß in den verschiedenen Schaltzuständen der Schaltvorrichtung (1) sich nur eines der aus Halbleiterschaltelementen (D6, ..., D9) bestehenden Schaltelemente (6, ..., 9) im Durchlaßzustand befindet und
daß in den Kompensationszweigen Induktivitäten (L10, L11) angeordnet sind, die zur Erzeugung von Parallelresonanzen mit der nach außen wirksamen Kapazität der sperrenden Schaltelemente, die dem sich im Durchlaßzustand befindenden Schaltelement benachbart sind, dienen.

3. Telekommunikationsgerät nach Anspruch 2,
dadurch gekennzeichnet,
daß Schaltdioden (D6, ..., D9) als Schaltelemente (6, ..., 9) dienen.

4. Telekommunikationsgerät nach einem der Ansprüche 1 bis 3,
dadurch gekennzeichnet,
daß den zwei ersten Signalwegen (3, 5) ein Empfänger (13) und ein Sender (14) zugeordnet sind und
daß den zwei zweiten Signalwegen (2, 4) jeweils eine Antenne (2, 4) zugeordnet ist.

5. Schaltvorrichtung (1) mit vier in einer Ringschaltung angeordneten Schaltzweigen mit jeweils einem Schaltelement (6, ... , 9; D6, ... , D9), bei der den Schaltelementen Kompensationszweige (10,11; L10, C10, L11, C11) parallel geschaltet sind, die jeweils zur Erzeugung einer Parallelresonanz zusammen mit einem sperrenden Schaltelement dienen,
dadurch gekennzeichnet,
daß die Zuordnung eines Kompensationszweiges (10,11; L10, C10, L11, C11) zu einem der Schaltelemente (6, ... , 9; D6, ... , D9) vom Schaltzustand der Schaltvorrichtung (1) abhängig ist.

6. Verfahren zum Betreiben einer Schaltvorrichtung (1) mit vier in einer Ringschaltung angeordneten Schaltzweigen mit jeweils einem Schaltelement (6, ... , 9; D6, ... , D9), bei der den Schaltelementen Kompensationszweige (10,11; L10, C10, L11, C11) parallel geschaltet sind, die jeweils zur Erzeugung einer Parallelresonanz zusammen mit einem sperrenden Schaltelement dienen,
dadurch gekennzeichnet,
daß die Zuordnung eines Kompensationszweiges (10,11; L10, C10, L11, C11) zu einem der Schaltelemente (6, ... , 9; D6, ... , D9) in Abhängigkeit von die Schaltelemente steuernden Steuersignalen (18, 19, 20, 21) festgelegt wird.
